# EUROPÄISCHE PATENTSCHRIFT

(11) **EP 2 126 402 B1**
(45) Veröffentlichungstag und Bekanntmachung des Hinweises auf die Patenterteilung: **04.04.2012**
(21) Anmeldenummer: 07856672.6
(22) Anmeldetag: 13.12.2007
(51) Int. Cl.: F16D 66/02

(54) **VERSCHLEISSANZEIGER MIT TEMPERATURSENSOR**
WEAR INDICATOR HAVING A TEMPERATURE SENSOR
INDICATEUR D'USURE AVEC CAPTEUR DE TEMPÉRATURE

(30) Priorität: 15.12.2006 DE 102006059785
(43) Veröffentlichungstag der Anmeldung: 02.12.2009
(73) Patentinhaber: Pex Kabeltechnik GmbH, 71083 Herrenberg-Gülstein (DE)
(72) Erfinder: KORECKI, Jörg, 71134 Aidlingen (DE); SCHÖCK, Marco, 71272 Renningen (DE); KAPPEL, Sebastian, 72160 Horb (DE)
(74) Vertreter: Weiss, Peter
(86) Internationale Anmeldenummer: PCT/EP2007/010926
(87) Internationale Veröffentlichungsnummer: WO 2008/071425

(56) Entgegenhaltungen:
- EP-A- 0 347 654
- EP-A- 1 174 636
- DE-A1- 4 231 107
- US-A- 3 674 114
- US-A- 5 559 286

## Beschreibung

Die Erfindung betrifft eine Bremsanlage für ein Fahrzeug nach den Merkmalen des Oberbegriffs des Anspruchs 1.

### Stand der Technik

Verschleissanzeiger für Bremsbeläge sind in vielfältiger Form und Ausführung bekannt und auf dem Markt. Sie dienen dazu, den Verschleiss der Bremsbeläge zu überwachen und möglichst früh dem Fahrer ein Signal zu übermitteln, dass die Bremsbeläge ausgetauscht werden sollen. Dabei ist in der Regel dem Bremsbelag ein Verschleisskörper zugeordnet, in dem sich ein Kontaktelement, meist ein elektrischer Leiter, befindet. Wird die Oberfläche dieses Verschleisskörpers durch den Bremsgegenkörper abgeschliffen, trifft der Bremsgegenkörper nach einer vorgegebenen Verschleisstiefe auch auf das Kontaktelement, so dass über das Kontaktelement eine Meldung an die Fahrzeugkontrolle abgegeben wird, dass der Bremsbelag einen gewissen Verschleissgrad erreicht hat.

Um eine stufenförmige Erfassung der Abnutzung des verschleissbaren Belages zu ermöglichen, ist in der DE 100 22 067 A1 vorgesehen, dass ein zweiter elektrischer Leiter innerhalb des Verschleisskörpers angeordnet ist, der mit einer Drahtschleife elektrisch verbunden ist und der mit seinem freien Ende in einem Abstand von der Verschleissfläche endet, der kleiner als der Abstand der Drahtschleife ist.

Bei der DE 40 21 568 A1 werden zwei elektrische Leiter in einem Einlegeteil umspritzt und danach dieses Einlegeteil in einem Spritzgussteil eingelegt und zu einer einteiligen Warnpille umspritzt.

Aus der DE 102 53 329 A1 ist eine Vorrichtung zum Überwachen des Verschleisses eines Bremsbelages mittels zumindest einem in einem Fühler geführten Kontaktelements bekannt, wobei der Fühler einen Schlitz zum Einlegen eines elektrischen Leiters aufweist, welcher durch einen Kanal in einem Verschleisskörper zurückgeführt ist.

Des weiteren ist aus der DE 698 24 413 P2 ein Verfahren und eine Vorrichtung zum Anzeigen der Menge an Bremsbelagmaterial in einer Trommelbremsbaugruppe bekannt, wobei dem Bremsbelag ein erster und ein zweiter Temperatursensor zugeordnet sind, wobei die Temperatur selbst als ein Anzeichen für einen abgenutzten Bremsbelag benutzt wird. Dieser Sensor befindet sich in einem anderen Abstand von der Verschleissfläche des Bremsbelages und misst die Temperatur des Bremsbelages an seiner jeweiligen Stelle in dem Belag. Die Zeit, die es dauert, bis jeder Sensor eine jeweilige vorbestimmte Temperatur erreicht, wird ebenfalls gemessen und die Menge der Abnutzung bei dem Bremsbelag wird anhand des Verhältnisses dieser beiden Zeiten überwacht. Dieses Verfahren ist ungenau und unterliegt erheblichen Mängeln.

Weiterhin wird in der EP 0 297 429 A1 ein Geber für den Betriebszustand von Bremsen beschrieben, welcher aus einem Verschleisssensor mit einer oder mehreren, durch die Reibungsabtragung unterbrechbaren Kontaktbrücken und einem Temperatursensor besteht, die beide in einer einzigen, in eine Durchgangsbohrung einer Bremsbacke mit ihrem Bremsbelag passende, mehrstufige Hülse angeordnet sind, die zwischen Bremsbelag und der Bremsbacke verschraubt oder in den Bremsbelag mittels einer geeigneten Kerbverbindung eingepresst werden kann.

Die EP 1 174 636A beschreibt einen mehrstufigen Sensor zur Überwachung der Bremsbelagdicke. Dieser ist mit einem Temperatursensor kombiniert. Er bestehet aus mehreren parallel, in definierten Abständen angeordneten Widerständen . Diese sind mit einer Abtastschaltung verbunden. Gemeinsam mit einem Heissleiter sind diese auf einem PC-Board angebracht. Da die Bremsbelagdicke schrittweise abnimmt, werden die Widerstände schrittweise abgetragen und ändern damit schrittweise den Gesamtwiderstand des Sensors. Daraus lässt sich die Belagsdicke auswerten.

Des Weiteren wird in der DE 42 31 107 A1 ein Sensor zur Bestimmung der Belagsdicke und gleichzeitig der Temperatur von Bremsbelägen von Bremsen, insbesondere von Kraftfahrzeugen, vorgeschlagen. In oder auf dem Bremsbelag ist ein elektrischer, temperaturabhängiger Widerstand angeordnet. Damit wird gleichzeitig die Temperatur im anliegenden Bremsbelag und an der Bremstrommel bestimmt.

Die EP 0 347 654A offenbart einen Geber für den Betriebszustand von Bremsen. In einem gemeinsamen Gehäuse ist ein Verschleisssensor und ein Temperatursensor eingebettet. In das Gehäuse ist ein metallischer Kontaktträger eingebettet, an welchem die Leitungen des Signalstromkreises des Verschleisssensors angeschweisst sind, welcher dem Temperatursensor als Halter und Wärmeleiter dient und welcher als vormontierbare Baugruppe in das Gehäuse einsetzbar ist.

Des Weiteren wird in der US 3,674,114A eine Vorrichtung zur Überwachung der Temperatur und Dicke eines Bremsbelags gezeigt, bei der als Temperatursensor ein Bi-Metall-Streifen eingesetzt wird. Der Bi-Metall-Streifen nimmt die Temperatur des Bremsbelags auf. Ist ein bestimmter Grenzwert erreicht, schliesst er einen Kontakt und gibt damit ein entsprechendes Signal.

### Aufgabe

Aufgabe der vorliegenden Erfindung ist es, eine Bremsanlage der o.g. Art zu schaffen, bei der eine Bremse mit oder ohne handelsüblichem Verschleissanzeiger zusätzlich einer Überwachung unterworfen wird.

### Lösung der Aufgabe

Zur Lösung der Aufgabe führen die Merkmale des kennzeichnenden Teils des Anspruchs 1.

Zumindest ein Temperatursensor ist zumindest einem Kabelstrang eines Anzeigerkabels zugeordnet.

Die eigentliche Überwachung des Bremsbelagverschleisses wird nach wie vor von dem Verschleissanzeiger auf bspw. elektrischem Weg übernommen. So ist das Anzeigekabel dasjenige Kabel, dass das eigentliche Signal abgibt, wenn der Bremsbelag eine vorgegebene Dicke unterschreitet. Jedoch wird auch die Temperatur um diesen Verschleissanzeiger kontrolliert. Sollte eine vorgegebene Temperatur überschritten werden, bei der zu erwarten ist, dass Teile der Bremse erheblich leiden bzw. die Funktion erheblich beeinträchtigt sein könnte, wird dies über den Temperatursensor ermittelt und einer Kontrolleinheit mit ggf. einem Signalspeicher weitergegeben. Selbstverständlich ermittelt der Temperatursensor auch einen Anstieg der Temperatur in der gesamten Bremsanlage, sofern sich dieser Temperaturanstieg auch auf den Bereich des Verschleissanzeigers erstreckt. Dementsprechend kann dieser Temperaturanzeiger auch ermitteln, ob bspw. ein Radlager schadhaft ist oder ob sonst an der Bremse ein Fehler gegeben ist, der zu einer Temperaturerhöhung führt.

Durch die Zuordnung des Temperatursensors zu einem Kabelstrang des Anzeigerkabels, welches sich in der Regel ebenso erwärmt, wie die Umgebung der Bremse selbst, ist ein Abgreifen der Temperatur auch an eben diesem Anzeigerkabel möglich. Dabei ist ein eigenes Gehäuses vorgesehen, welches den Temperatursensor im Verhältnis zum Anzeigerkabel festlegt. Bspw. kann dieses Gehäuse zweitteilig sein und auf das Anzeigerkabel aufgeclipst werden. Eine Festlegung insbesondere dieses zweiteiligen Gehäuses kann über ein Befestigungselement, z.B. ein Schrumpfschlauchabschnitt erfolgen.

In einem weiteren Ausführungsbeispiel der Erfindung soll der Temperatursensor selbst in dem Verschleissanzeiger integriert sein. Das bedeutet, dass er die Temperaturerhöhung der Bremse ermittelt und dieses Signal an die oben erwähnte Kontrolleinheit weitergibt. Bspw. kann in diesem Fall der Temperatursensor innerhalb einer Schlaufe angeordnet sein, die von dem eigentlichen Anzeigekabel gebildet wird. Ein Vorteil dieser Anordnung ist, dass das Verbindungskabel zwischen Temperatursensor und seinem Signalspeicher bzw. seiner Kontrolleinheit zwischen den Kabelsträngen des Anzeigekabels aus dem Verschleissanzeiger geführt werden kann. Dabei genügt eine einzige Kabelummantelung für Verbindungskabel und Anzeigerkabel.

Wie oben erwähnt, sollen Verbindungskabel und Anzeigerkabel zusammen zu einem Signalspeicher bzw. einer Kontrolleinheit geführt werden. Sollen jedoch eine Mehrzahl von Bremsanlagen überwacht werden, wie dies insbesondere bei mehrachsigen Fahrzeugen der Fall ist, so dürfte es ratsam sein, zwischen die Kontrolleinheit und die Bremsanlage, einen Multiplexer einzuschalten. In diesem Multiplexer münden dann sämtliche Leitungen von den Bremsanlagen
und werden von dem Multiplexer in periodischen Abständen oder kontinuierlich abgefragt. In diesem Fall kann eine einzige Leitung genügen, über die dann die entsprechenden abgefragten Signale jeweils an die Kontrolleinheit bzw. den Signalspeicher weitergeleitet werden.

Von der vorliegenden Erfindung wird auch das Verfahren generell umfasst, dass eine Temperatur des Verschleissanzeigers selbst und/oder seiner Peripherie und/oder des Anzeigerkabels überwacht wird.

Des weiteren wird Schutz auch für den eigentlichen Verschleissanzeiger begehrt, bei dem sich in einem Gehäuse ein Anzeigerkabel befindet, wobei dem Gehäuse und/oder dem Anzeigerkabel ein Temperatursensor zugeordnet ist, wobei der Temperatursensor zumindest einem Kabelstrang des Anzeigerkabels zugeordnet ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Längsschnitt durch einen erfindungsgemässen Verschleissanzeiger mit integriertem Temperatursensor;
Figur 2 eine Seitenansicht eines Verschleissanzeigers mit einer, einem Anzeigerkabel zugeordneten, im Querschnitt dargestellten Temperaturerfassungseinrichtung;
Figur 3 einen vergrössert dargestellten Querschnitt durch einen Teil der Temperaturerfassungseinrichtung gemäss Figur 2 entlang Linie III-III;
Figur 4 eine Draufsicht auf eine Signalübertragungseinheit für Signale von einer Mehrzahl von Verschleissanzeigern und Temperaturerfassungseinheiten.

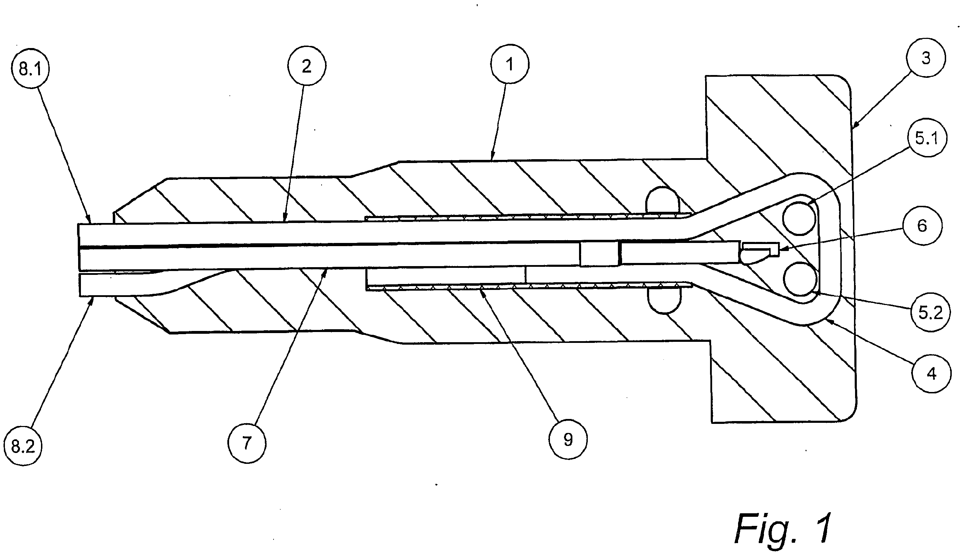

Gemäss Figur 1 ist von einem erfindungsgemässen Verschleissanzeiger ein Gehäuse 1 dargestellt, in welchem sich ein Anzeigerkabel 2 befindet. Dieses Anzeigerkabel 2 bildet nahe einer Stirnfläche 3 eine Schlaufe 4, die um entsprechende Umlenkungen 5.1 und 5.2 geführt ist.

In der Schlaufe 4 befindet sich erfindungsgemäss ein Temperatursensor 6, der die Temperatur im Bereich der Schlaufe 4 erfasst. Die entsprechenden Temperatursignale werden über ein Verbindungskabel 7 einem nicht näher gezeigten Signalspeicher zugeführt. Die Einheit aus Anzeigerkabel 2 mit den beiden Kabelsträngen 8.1 und 8.2, Verbindungskabel 7 und Temperatursensor 6 wird durch ein Klemmelement 9 zusammengehalten und gemeinsam umspritzt, so dass diese Einheit dann in dem Gehäuse 1 integriert ist.

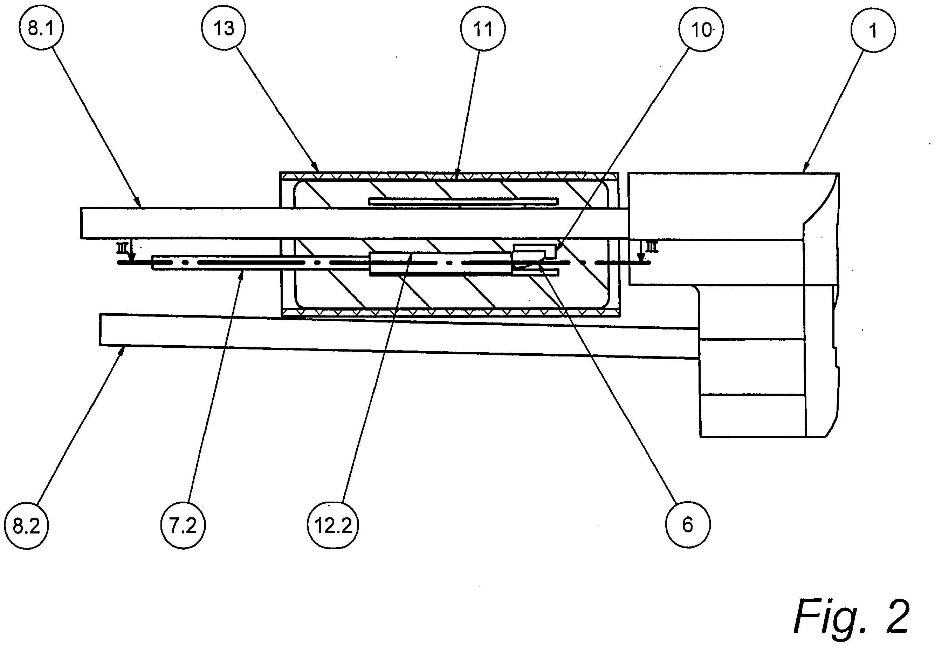

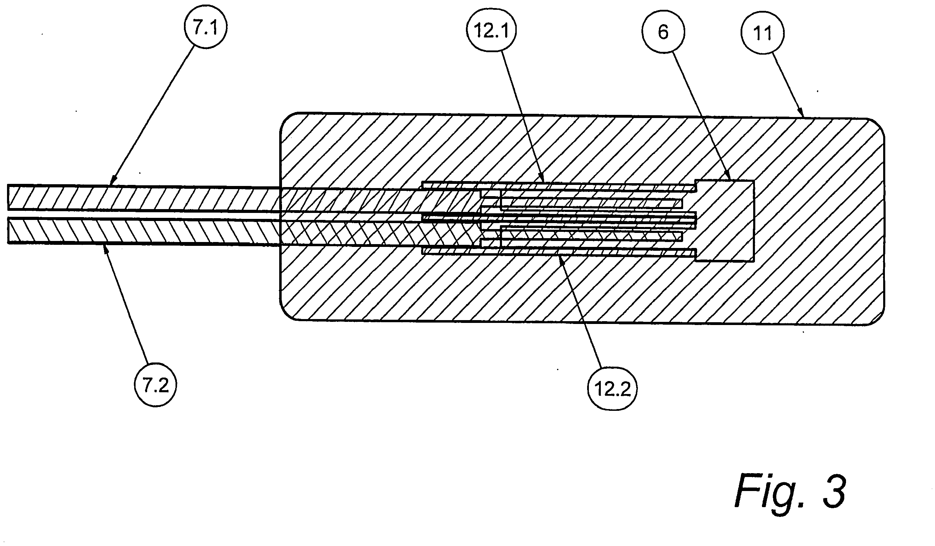

Gemäss dem Ausführungsbeispiel der vorliegenden Erfindung nach den Figuren 2 und 3 befindet sich der Temperatursensor 6 ausserhalb des Gehäuses 1 des Verschleissanzeigers. Er ist jedoch einem Kabelstrang 8.1 des Anzeigerkabels 2 zugeordnet, wozu er sich in einem Raum 10 eines Gehäuses 11 befindet. In dieses Gehäuse 11 führen auch zwei Verbindungskabel 7.1 und 7.2, die mit dem Temperatursensor 6 verbunden sind. Über die entsprechende Verbindungsstelle ist jeweils ein Isolator 12.1 und 12.2 zur Isolierung des Anschlusses gestülpt.

Zur Festlegung des Gehäuses 11, welches bspw. aus zwei Schalenhälften bestehen kann, dient ein Schrumpfschlauchabschnitt 13 als Befestigungselement, der das Gehäuse 11 an dem Kabelstrang 8.1 hält.

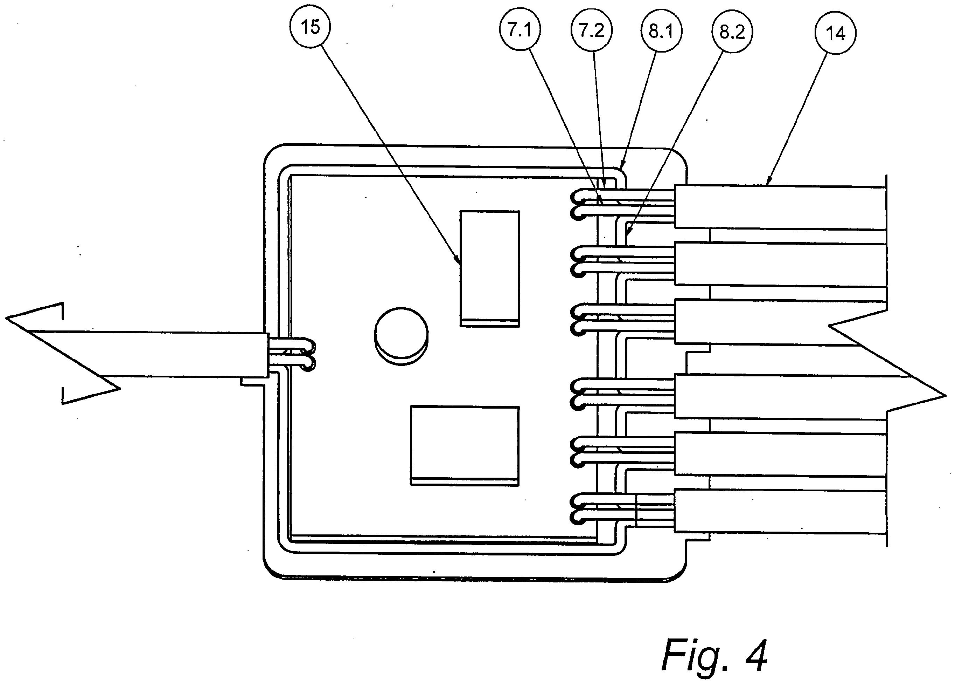

In Figur 4 ist erkennbar, dass die Kabelstränge 8.1 und 8.2 und die Verbindungskabel 7.1 und 7.2 gemeinsam in einer Kabelummantelung 14 zu einem Multiplexer 15 geführt werden. Mit dem Multiplexer 15 sind bevorzugt eine Mehrzahl von Verschleissanzeiger mit zugeordneten Temperatursensoren verbunden, im gezeigten Ausführungsbeispiel die Bremsanlage eines 3-Achs-Trailers.

Von dem Multiplexer 15 führt dann nur eine Einheit 16, umfassend Kabelstrang 8.1 und 8.2 sowie Verbindungskabel 7.1 und 7.2, und/oder auch eine Funkübertragung zu dem Signalspeicher. In dem Multiplexer werden laufend oder periodisch die einzelnen Zuleitungen abgefragt und deren Signale dann über die Einheit 16 dem Signalspeicher zugeführt. Auf diese Weise ist ein Aufwand für die Verkabelung minimiert.

### Bezugszeichenliste

| | | | | | |
|---|---|---|---|---|---|
| 1 | Gehäuse | 34 | | 67 | |
| 2 | Anzeigerkabel | 35 | | 68 | |
| 3 | Stirnfläche | 36 | | 69 | |
| 4 | Schlaufe | 37 | | 70 | |
| 5 | Umlenkung | 38 | | 71 | |
| 6 | Temperatursensor | 39 | | 72 | |
| 7 | Verbindungskabel | 40 | | 73 | |
| 8 | Kabelstrang | 41 | | 74 | |
| 9 | Klemmelement | 42 | | 75 | |
| 10 | Raum | 43 | | 76 | |
| 11 | Gehäuse | 44 | | 77 | |
| 12 | Isolator | 45 | | 78 | |
| 13 | Befestigungselement | 46 | | 79 | |
| 14 | Kabelummantelung | 47 | | | |
| 15 | Multiplexer | 48 | | | |
| 16 | Einheit | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Bremsanlage für ein Fahrzeug mit zumindest einem Bremsbelag, dem zumindest ein Verschleissanzeiger zugeordnet ist, wobei der Bremsanlage und/oder dem Verschleissanzeiger zumindest ein Temperatursensor (6) zugeordnet ist, wobei der zumindest eine Temperatursensor (6) zumindest einem Kabelstrang (8.1,8.2) eines Anzeigerkabels (2) zugeordnet ist und der Temperatursensor (6) in dem Verschleissanzeiger integriert ist,
**dadurch gekennzeichnet,**
**dass** der Temperatursensor (6) innerhalb einer Schlaufe (4) angeordnet ist, die von dem Anzeigerkabel (2) ausgeformt ist.

2. Bremsanlage nach Anspruch 1, **dadurch gekennzeichnet, dass** ein von dem Temperatursensor (6) zu einem Signalspeicher oder Kontrolleinheit geführtes Verbindungskabel (7) zwischen Kabelsträngen (8.1,8.2) des Anzeigerkabels (2) aus dem Verschleissanzeiger geführt ist.

3. Bremsanlage nach wenigstens einem der Ansprüche 1 oder 2, **dadurch gekennzeichnet, dass** der Temperatursensor (6) dem Anzeigerkabel innerhalb eines Gehäuses (1) des Verschleissanzeigers zugeordnet ist.

4. Bremsanlage nach wenigstens einem der Ansprüche 1 oder 2, **dadurch gekennzeichnet, dass** der Temperatursensor (6) dem Anzeigerkabel (2) ausserhalb eines Gehäuses (1) des Verschleissanzeigers zugeordnet ist.

5. Bremsanlage nach Anspruch 4, **dadurch gekennzeichnet, dass** der Temperatursensor (6) in einem Gehäuse (11) angeordnet ist, welches den Temperatursensor (6) so an dem Anzeigerkabel (2) festgelegt; dass der Temperatursensor (6) auf das Anzeigerkabel (2) hin ausgerichtet ist.

6. Bremsanlage nach Anspruch 5, **dadurch gekennzeichnet, dass** das Gehäuse (11) über ein Befestigungselement (13) an dem Anzeigerkabel (2) festgelegt ist.

7. Bremsanlage nach wenigstens einem der Ansprüche 1 bis 6, **dadurch gekennzeichnet, dass** ein Verbindungskabel (7) des Temperatursensors (6) zu einem Signalspeicher gegebenenfalls zusammen mit einem Anzeigerkabel (2) vor dem Signalspeicher mit einem Multiplexer (15) verbunden ist.

8. Bremsanlage nach Anspruch 7, **dadurch gekennzeichnet, dass** eine Mehrzahl von Verbindungskabel (7) in den Multiplexer (15) einmünden oder die Übertragung der Symbole durch Funk erfolgt, dieser aber nur über ein oder mehrere Signalkabel (16) oder über Funk mit dem Signalspeicher verbunden ist.

9. Bremsanlage nach Anspruch 7 oder 8, **dadurch gekennzeichnet, dass** eine Mehrzahl von Anzeigerkabel (2) in den Multiplexer (15) einmünden, diese aber nur über ein oder mehrere Signalkabel (16) oder über Funk mit einem Signalspeicher für die Signale verbunden ist, die über die Anzeigerkabel übermittelt werden.

## Claims

1. Braking system for a vehicle having at least one brake lining, which has at least one associated wear indicator, with the braking system and/or the wear indicator having at least one associated temperature sensor (6), the at least one temperature sensor (6) having at least one associated cable run (8.1,8.2) of an indicator cable (2), and the temperature sensor (6) being integrated in the wear indicator,
**characterised**
**in that** the temperature sensor (6) is arranged within a loop (4) which is formed by the indicator cable (2).

2. Braking system according to Claim 1, **characterised in that** a connecting cable (7), routed from the temperature sensor (6) to a signal store or monitoring unit, is routed between cable runs (8.1,8.2) of the indicator cable (2) from the wear indicator.

3. Braking system according to at least one of Claim 1 or 2, **characterised in that** the temperature sensor (6) is associated with the indicator cable within a housing (1) of the wear indicator.

4. Braking system according to at least one of Claim 1 or 2, **characterised in that** the temperature sensor (6) is associated with the indicator cable (2) outside a housing (1) of the wear indicator.

5. Braking system according to Claim 4, **characterised in that** the temperature sensor (6) is arranged in a housing (11) which fixes the temperature sensor (6) on the indicator cable (2) such that the temperature sensor (6) is aligned with respect to the indicator cable (2).

6. Braking system according to Claim 5, **characterised in that** the housing (11) is fixed to the indicator cable (2) via an attachment element (13).

7. Braking system according to at least one of Claims 1 to 6, **characterised in that** a connecting cable (7) of the temperature sensor (6) to a signal store is connected to a multiplexer (15), possibly together with an indicator cable (2), upstream of the signal store.

8. Braking system according to Claim 7, **characterised in that** a plurality, of connecting cables (7) lead into the multiplexer (15) or the symbols are transmitted by radio, but said multiplexer is connected to the signal store only via one or more signal cables (16) or by radio.

9. Braking system according to Claim 7 or 8, **characterised in that** a plurality of indicator cables (2) lead into the multiplexer (15), but said multiplexer is connected only via one or more signal cables (16) or by radio to a signal store for the signals which are transmitted via the indicator cables.

## Revendications

1. Système de freinage pour véhicule avec au moins une garniture de frein à laquelle est associé au moins un indicateur d'usure, au système de frein et/ou à l'indicateur d'usure étant associé au moins un capteur de température (6), l'au moins un capteur de température (6) étant associé à au moins un brin de câble (8.1,8.2) d'un câble d'indicateur (2) et le capteur de température (6) étant intégré dans l'indicateur d'usure,
**caractérisé par le fait**
**que** le capteur de température (6) est disposé à l'intérieur d'une boucle (4) qui est formée par le câble d'indicateur (2).

2. Système de freinage selon la revendication 1, **caractérisé par le fait qu'**un câble de connexion amené du capteur de température (6) à une mémoire de signal ou une unité de contrôle (7) est guidé entre brins de câble (8.1, 8.2) du câble d'indicateur (2) hors de l'indicateur d'usure.

3. Système de freinage selon au moins l'une des revendications 1 ou 2, **caractérisé par le fait que** le capteur de température (6) est associé au câble d'indicateur à l'intérieur d'un boîtier (1) de l'indicateur d'usure.

4. Système de freinage selon au moins l'une des revendications 1 ou 2, **caractérisé par le fait que** le capteur de température (6) est associé au câble d'indicateur (2) à l'extérieur d'un boîtier (1) de l'indicateur d'usure.

5. Système de freinage selon la revendication 4, **caractérisé par le fait que** le capteur de température (6) est disposé dans un boîtier (11) qui fixe le capteur de température (6) au câble d'indicateur (2) de sorte que le capteur de température (6) soit orienté vers le câble d'indicateur (2).

6. Système de freinage selon la revendication 5, **caractérisé par le fait que** le boîtier (11) est fixé par l'intermédiaire d'un élément de fixation (13) au câble d'indicateur (2).

7. Système de freinage selon au moins l'une des revendications 1 à 6, **caractérisé par le fait qu'**un câble de connexion (7) du capteur de température (6) est connecté à une mémoire de signal également ensemble avec un câble d'indicateur (2) avant la mémoire de signal par un multiplexeur (15).

8. Système de freinage selon la revendication 7, **caractérisé par le fait qu'**une pluralité de câbles de connexion (7) aboutissent dans le multiplexeur (15) ou que la transmission des symboles s'effectue par radio, mais que dernier n'est toutefois connecté à la mémoire de signal que par un ou plusieurs câbles à signal (16) ou par radio.

9. Système de freinage selon la revendication 7 ou 8. **caractérisé par le fait qu'**une pluralité de câbles d'indicateur (2) aboutissent dans le multiplexeur (15), mais que dernier n'est toutefois connecté à une mémoire de signal que par un ou plusieurs câbles à signal (16) ou par radio à une mémoire de signal pour les signaux qui sont transmis par l'intermédiaire des câbles d'indicateur.
